# EUROPEAN PATENT SPECIFICATION

(11) **EP 2 042 971 B1**
(45) Date of publication and mention of the grant of the patent: **25.12.2013**
(21) Application number: 08015207.7
(22) Date of filing: 28.08.2008
(51) Int. Cl.: G06F 3/038, G06F 3/0362

(54) **Mobile terminal**
Mobiles Endgerät
Terminal mobile

(30) Priority: 28.08.2007 KR 20070086700
(43) Date of publication of application: 01.04.2009
(73) Proprietor: LG Electronics Inc., Seoul 150-721 (KR)
(72) Inventor: Lee, Eun-Mok, Gangbuk-Gu, Seoul (KR); An, Hyun-Jun, Suwon, Gyeonggi-Do (KR); Kim, Kyung-Sik, Anyang, Gyeonggi-Do (KR)
(74) Representative: Katérle, Axel

(56) References cited:
- WO-A1-2007/084078
- US-A1- 2006 044 259

## Description

### BACKGROUND OF THE INVENTION

### Field of the Invention

The present invention relates to a method, a computer program product and an input device adapted for reducing malfunctions and a mobile terminal implementing the same.

### Discussion of the Background Art

A mobile terminal is a device that can be carried around and has one or more functions such as to perform voice and video call wireless communications, inputting and outputting information, storing data, and the like.

As such functions become more diversified, the conventional mobile terminal has grown to support more complicated functions such as capturing images or video, reproducing music or video files, playing games, receiving broadcast signals, and the like. The conventional mobile terminal may be embodied in the form of a multimedia player or device.

In order to implement various functions of such multimedia players or devices, the conventional mobile terminal requires sufficient support in terms of hardware or software, for which numerous attempts are being made and implemented. For example, research continues to develop a user interface environment allowing users to easily and conveniently. Also, as users consider their mobile terminal to be a personal portable device that may express their personality, various types of conventional mobile terminals have been provided to allow users to easily perform functions and selections according to their personality.

In some conventional mobile terminals, several keys of the keypad need to be repeatedly pressed or touched for menu navigation and/or to search for desired items among a large amount of contents, causing user inconvenience. Thus, other conventional devices use a manipulation device that allows quick searching and accessing of desired information via rotation or shift manipulation to provide an improved user interface environment and to enhance user convenience.

US 2006/044259 discloses a portable computer having a touch pad extending generally from a left side to a right side of a main body of the portable computer. A sensor is disposed between the touch pad and a keyboard of the portable computer. When the sensor detects an input, i.e., the user's palms resting on the sensor, a touch pad area corresponding to the area of the sensor that detects the input is disabled, i.e., the touch input is considered to be an unintended input.

WO 2007/084078 discloses a keyboard for a mobile terminal having rocker buttons, wherein the rocker button is adapted to receive different inputs corresponding to any of four corners of the button by sensing electrical contact between contacts corresponding to a respective corner of the button. Further, the rocker button can receive an input corresponding to a central portion of the button by sensing that each of the four sensors has electrical contact. Pressure differentiation may be employed, such that an input is disregarded if the sensed pressure is not above a threshold value. Further, if more than two corner buttons are contacted or pressed at the same time, the input may be disregarded as an accidental key press.

However, the conventional manipulation device has a problem in that because the user's finger moves in a contact manner, adjacent keys or touch regions may unintentionally be activated while the user's finger moves along the manipulation device. This problem increases as the mobile terminal is made to be more compact and thinner.

### SUMMARY OF THE INVENTION

The present inventors recognized certain drawbacks of the related art, as explained above. Upon such recognition, the following concepts and features have been conceived.

One objective of the present invention is to provide a mobile terminal with a manipulation device used in menu searching and functional control that allows fast and accurate user inputs.

Another objective of the present invention is to provide an input device that reduces erroneous activation of adjacent portions of the manipulating device during use.

A mobile terminal according to claim 1 is provided. The mobile terminal may include: a first manipulating unit that has a plurality of movement directions based on a reference position and performing an input operation corresponding to each movement direction; a second manipulating unit disposed around the first manipulating unit and inputting information in a touch (tactile) manner; and an erroneous input detecting unit, which is installed to allow detection of user touches between the first and second manipulating units so as to distinguish whether user inputs were or were not intentionally made on the second manipulating unit, by comparing the signals generated when the second manipulating unit is actually operated and the signals generated by erroneous touches made adjacent to the second manipulating unit.

Another embodiment of the input device includes: a first manipulating unit formed to be manipulated by rotating a wheel forwardly and reversely and performing an input operation corresponding to each movement direction; a third manipulating unit disposed at a central portion of the wheel and inputting information in a touch manner; and an erroneous input detecting unit which is installed to allow detection of user touches of the third manipulating unit at a plurality of positions so as to distinguish whether user inputs were or were not intentionally made on the third manipulating unit, by comparing the signals generated when the third manipulating unit is actually operated and the signals generated by erroneous touches applied to touched portions.

Another embodiment of the input device includes: a first manipulating unit formed to be manipulated by rotating a wheel forwardly and reversely and performing an input operation corresponding to each movement direction; a second manipulating unit disposed around the wheel and inputting information in a touch manner; a third manipulating unit disposed at a central portion of the wheel and inputting information in a touch manner; and an erroneous input detecting unit, which is installed to allow detection of user touches between the first and second manipulating units, so as to distinguish whether user inputs were or were not intentionally made on the third manipulating unit when the second manipulating unit is actually operated and also so as to distinguish whether user inputs were or were not intentionally made on the second manipulating unit when the third manipulating unit is actually operated, by comparing the signals generated when the second and third manipulating units are actually operated and the signals generated by erroneous touches applied to touched portions.

Other embodiments include a mobile terminal implementing one of the input devices, such as wireless communication device, a personal digital assistant (PDA), a handheld Global Positioning System (GPS) device, and another handheld terminal.

Other embodiments include a method and a computer program product corresponding to one of the disclosed input devices.

### BRIEF DESCRIPTION OF THE DRAWINGS

FIG. 1 is a front perspective view of a mobile terminal according to one exemplary embodiment of the present invention;

FIG. 2 is an exploded perspective view of the mobile terminal in FIG. 1 in a state that its cover is disassembled;

FIG. 3 shows an operational state of an input device in FIG. 2;

FIG. 4 is a graph showing the strength of signals sensed by first and second touch sensing units of the input device in FIG. 2;

FIG. 5 is a schematic block diagram of the input device according to an exemplary embodiment of the present invention;

FIG. 6 is a flow chart illustrating the process of controlling by the input device according to an exemplary embodiment of the present invention;

FIG. 7 is an exploded perspective view of the mobile terminal according to another exemplary embodiment of the present invention;

FIG. 8 shows an operational state of an input device in FIG. 7;

FIG. 9 is a graph showing the strength of signals sensed by third touch sensing units corresponding to each touched portion of the input device in FIG. 7;

FIG. 10 is a flow chart illustrating the process of controlling by the input device in FIG 7; and

FIG. 11 is a flow chart illustrating the process of controlling by a different input device according to an exemplary embodiment of the present invention.

### DETAILED DESCRIPTION OF THE INVENTION

An input device and a mobile terminal implementing the same according to exemplary embodiments of the present invention will now be described in detail with reference to the accompanying drawings.

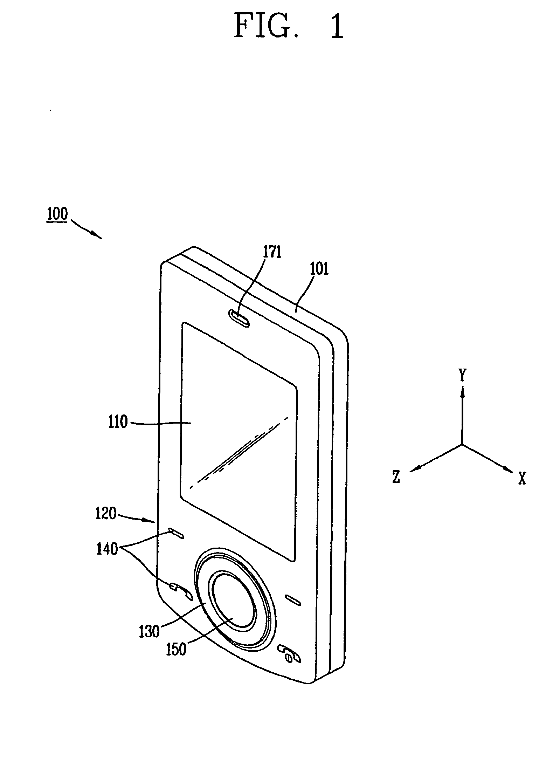

FIG. 1 is a front perspective view of a mobile terminal according to one exemplary embodiment of the present invention. As shown in FIG. 1, a mobile terminal 100 may include a terminal body 101 that constitutes an external appearance of the device, and a display unit 110 and an input device 120 are mounted on a front surface of the terminal body 101. Here, a front side refers to a Z direction, and an upper direction refers to a Y direction, as depicted in FIG 1.

An audio output unit 171 for outputting audible information such as a notification tone or a call tone may be provided on an upper portion of the terminal body 101.

The display unit 110 may be configured to output visual information according to various modes and functions of the mobile terminal 100. Namely, the display unit 110 may display content inputted via the input device 120, visually display a usage state of the terminal 100, or a status of a reproduced multimedia, or serve as a viewfinder of a camera device, or the like.

The input device 120 includes first and second manipulating units 130 and 140 (or other types of user interface elements). The first manipulating unit 130 may have a plurality of movement directions based on a reference position, and perform an input operation corresponding to each movement direction. The first manipulating unit 130 may be implemented in various manners. For example, (I) the first manipulating unit 130 may be manipulated by a forward or reverse rotation of a wheel-like element (e.g., a touch-sensitive ring or disk, a rotatable member, etc.), (II) the first manipulating unit 130 may be manipulated by tilting a pivot bar (or other tiltable or pivotable member), (III) the first manipulating unit 130 may be manipulated by rotating (or moving) a ball-like or a cylinder-like element, (IV) the first manipulating unit 130 may be manipulated by detecting a movement of a contact point of the user's finger or other input object (such as a stylus). FIG. 1 illustrates the above-described first case (I). In addition, the first manipulating unit 130 may have other structures in addition to those mention above, which are merely exemplary. For example, the first manipulating unit 130 may be referred to as a scroll member, a dial, a joystick, a mouse, etc.

The first manipulating unit 130 may perform various input operations according to a mode (or function) of the mobile terminal 100. For example, when a selectable list or menu is shown on the display unit (or screen) 110, the first manipulating unit 130 may be moved (rotated) by the user in a forward direction or in a reverse direction. Then, a cursor or a pointer displayed on the screen may be moved in a corresponding direction, and an audio or video-related function such as adjusting the volume or brightness of a screen image or a control panel may be controlled by the user.

A third manipulating unit 150 that may execute a selected item or pre-set content may be provided at a central portion of the first manipulating unit 130. The third manipulating unit 150 may include an actuator operable in a push manner or in a touch (tactile) manner.

The second manipulating unit 140 may be disposed around (or near) the first manipulating unit 130 and allows inputting of information in a touch manner. The second manipulating unit 140 may be assigned keys (or other types of activation elements) that may immediately execute an item selected from a list of particular functions of the mobile terminal 100 or keys (or other types of activation elements) that may input numbers or characters.

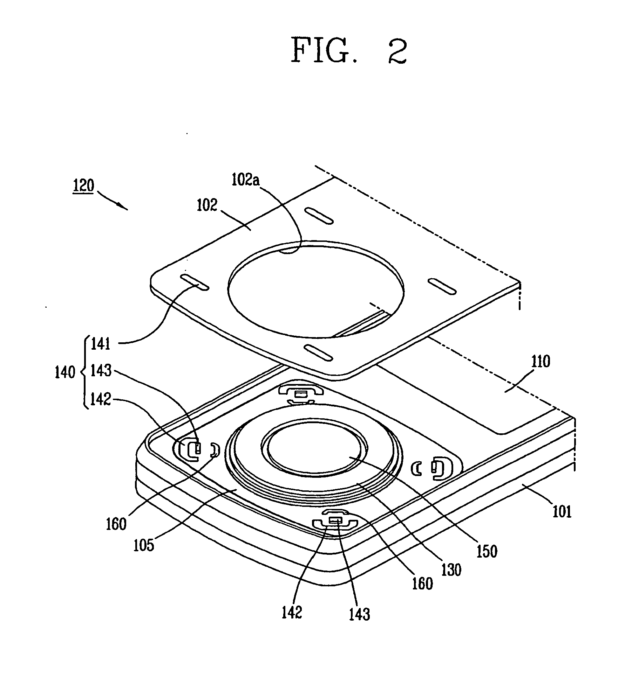

FIG. 2 is an exploded perspective view of the mobile terminal in FIG. 1 in a state that its cover is disassembled. As shown in FIG. 2, the input device 120 may include a cover 102 that forms a partial external appearance of the mobile terminal 100 and covers (at least a portion of) the display unit 110.

The cover 102 includes an installation hole 102a (or other type of opening) through which the first manipulating unit 130 is installed, and key marks 141 (or other types of visual indicators) that guide the second manipulating unit 140 to a corresponding manipulated position are formed around the installation hole 102a. The key marks 141 may be made of a transmissive material to allow light from a light emitting unit 143 (or other illumination means) disposed at an inner side thereof to transmit therethrough to allow easy user recognition.

The second manipulating unit 140 includes a first touch sensing unit(s) 142 (or other touch sensitive member) that senses a user touch or contact on the key mark 141. One or more first touch sensing units 142 are disposed at positions corresponding to each key mark 141 on a circuit board 105. The first touch sensing unit 142 may employ a method of detecting a change in capacitance and recognize any changes as an input signal or a method of detecting a change in pressure and recognize any changes as an input signal according to a touch input scheme. Of course, other detection methods may also be employed instead of the capacitance method and the pressure method described above. If the capacitance method is employed, when the user's finger inadvertently contacts a portion near the first manipulating unit 130 while the first manipulating unit 130 is being manipulated, there is high possibility that such contact is undesirably recognized as an input signal, so presence of the second touch sensing unit 160 would advantageously serve to avoid or at least minimize such possibility.

As shown in FIG 2, the input device includes a second touch sensing unit 160 (or other type of touch sensitive member) to detect erroneous (or undesired) touches applied to the second manipulating unit 140 when the first manipulating unit 130 is manipulated. A plurality of second manipulating units 140 and a plurality of first touch sensing units 142 may be formed around (or near) the first manipulating unit 130, and in order to control an individual input, one or more second touch sensing units 160 may be disposed for each first touch sensing unit 142.

In one embodiment, the distance between the first and second manipulating units 130 and 140 is relatively small, and thus the second manipulating unit 140 may be erroneously activated while only the first manipulating unit 130 should be activated. To minimize such erroneous activation, a second touch sensing unit 160 reduces the possibility that the first touch sensing unit 142 of the second manipulating unit 140 detects an unintentional or inadvertent touch of the user's finger on a portion near the first manipulating unit 130 when the first manipulating unit 130 is being activated (i.e., rotated).

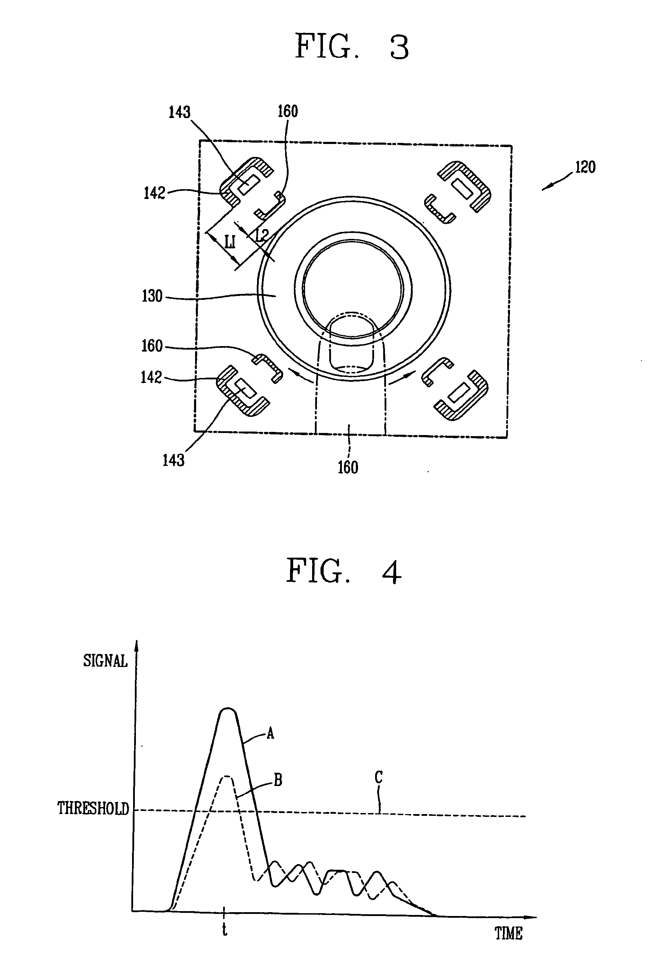

FIG. 3 shows an operational state of an input device in FIG. 2. As shown in FIG 3, the second touch sensing unit 160 is disposed between the first manipulating unit 130 and the first touch sensing unit 142 of the second manipulating unit 140. It can be seen that the distance L2 between the first manipulating unit 130 and the second touch sensing unit 160 is shorter than the distance L1 between the first manipulating unit 130 and the first touch sensing unit 142. Thus, when the first manipulating unit 130 is rotated (or otherwise activated or operated), a touch or contact that may be applied to the first touch sensing unit 142 may be additionally sensed by the second touch sensing unit 160 which is closer to the first manipulating unit 130.

FIG. 4 shows examples of waveforms of signals that may be detected by the first and second touch sensing units 142 and 160. In FIG. 4, 'A' is a waveform of one signal detected by one of the first and second touch sensing units 142 and 160, and 'B' is a waveform of another signal.

Assuming that 'A' is a waveform of a signal of the first touch sensing unit 142, when the waveform 'A' leaps (or otherwise increases suddenly) at a moment (t) and if its strength (or value) is greater than a reference value (C), the second manipulating unit 140 may perform an input operation of a corresponding key. In this case, however, if the waveform 'B' also leaps (or otherwise increases suddenly) at the same moment, a controller 161 determines whether the cause of the leap (or increase) in the waveform 'A' is possibly related to a manipulation or activation of the second manipulating unit 140.

As mentioned above, the input device 120 includes the erroneous input detecting unit (i.e., an undesired activation recognition device) which includes the second touch sensing unit 160 and the controller 161.

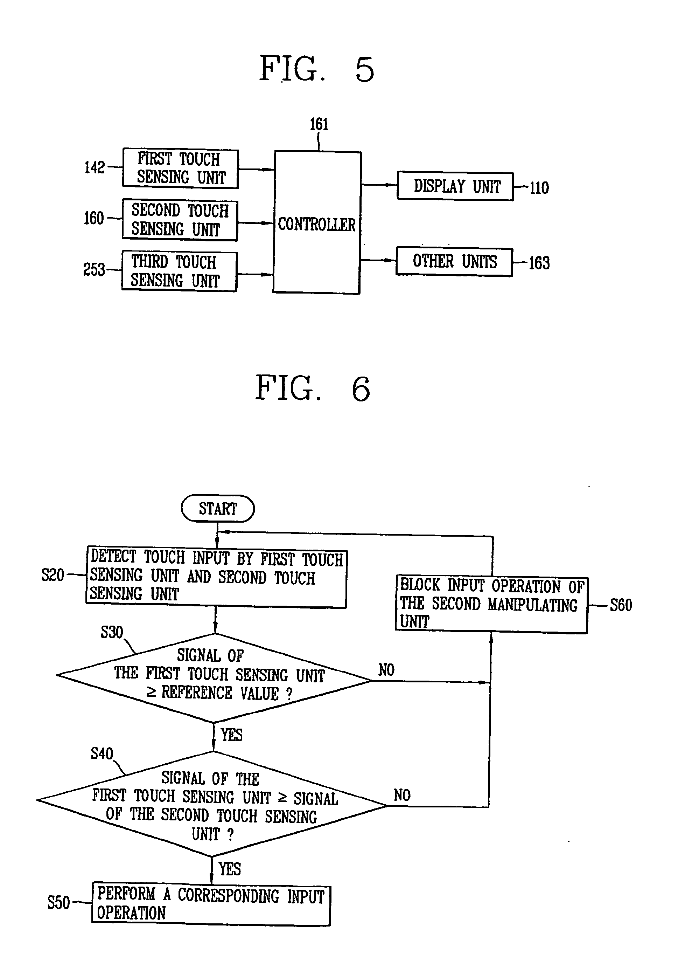

FIG. 5 is a schematic block diagram of the input device according to an exemplary embodiment of the present invention. As shown in FIG 5, the controller 161 receives signals detected by the first and second touch sensing units (142, 160) and compares them. If the controller determines that the signals indicate the manipulation (or activation) of the second manipulating unit 140, the controller outputs appropriate information on the display unit 110 (or screen) or executes a corresponding function through other units 163.

FIG. 6 is a flow chart illustrating the process of controlling by the input device according to an exemplary embodiment of the present invention. As shown in FIG 6, when the mobile terminal is in a standby mode (idle mode), in an editing mode, in a multimedia reproducing mode, etc., the first and second touch sensing units 142 and 160 may detect user touch inputs.

When the user manipulates (or activates) the input device 120, the controller 161 checks whether the signal of the first touch sensing unit 142 is greater than a reference value (threshold) (S30). If the signal of the first touch sensing unit 142 is smaller than the reference value (C), the controller 161 determines that there is no user input on the second manipulating unit 140.

If the signal of the first touch sensing unit 142 is greater than the reference value (C), the controller 161 checks whether the signal of the first touch sensing unit 142 is greater than the signal of the second touch sensing unit 160 (S40). If the signal of the first touch sensing unit 142 is not greater than that of the second touch sensing unit 160, the controller 161 determines that it is an unintentional touch (i.e., a user contact that was undesired, accidental, improper, etc.) that has been made while the first manipulating unit 130 was manipulated and the input of the second manipulating unit 140 is blocked (or otherwise disregarded) (S60).

Accordingly, if the signal of the first touch sensing unit 142 is greater than the reference value (C) and also greater than the signal of the second touch sensing unit 160, the controller 161 determines that the signal of the first touch sensing unit 142 corresponds to an intentional (or desired) manipulation and performs a corresponding input operation or function activation (S50).

Accordingly, an erroneous input that may be applied to the second manipulating unit 140 disposed around (or near) the first manipulating unit 130 may be prevented (or at least minimized) while the wheel 231 (or other user input member) of the first manipulating unit 130 is rotated (or moved), and thus, the accuracy of user inputs can be improved.

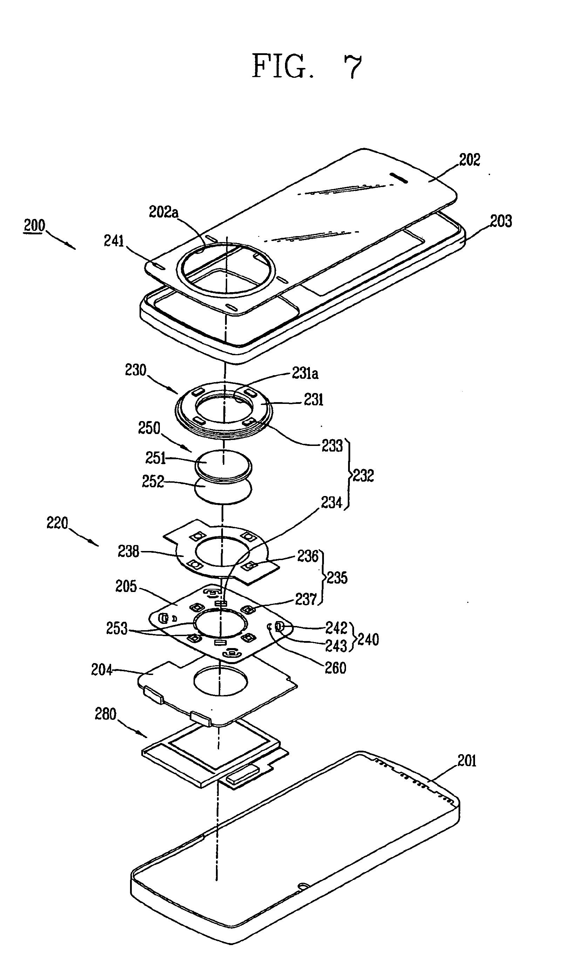

FIG. 7 is an exploded perspective view of the mobile terminal according to another exemplary embodiment of the present invention.

With reference to FIG. 7, at an outer side of a terminal body 201, there are provided a cover 202 (or other protective element) on which an installation hole 202a (or opening) allowing a first manipulating unit 230 to be installed therein and a frame 203 (or housing portion) on which the cover 202 is mounted to thus allow the cover 202 to be supported thereon.

The first manipulating unit 230 may be installed to be rotatable (or otherwise movable) and to have a horizontal (or flat) orientation on the surface of the terminal body 201, and to include a wheel 231 (or other movable member) having a through hole 23 1 a (or opening) at a central portion thereof. The wheel 231 may include a rotation detecting unit 232 (or other detector means) that detects the rotation (or other movement) of the wheel 231 to allow certain user input operations and a push switch unit 235 (or other pressable member) operated according to the pressing of the rotational wheel 231 to allow other types of user input operations.

The rotation detecting unit 232 and the push switch unit 235 may be mounted on (or otherwise operably attached to) a circuit board 205 (or other control element). As shown in FIG. 7, the rotation detecting unit 232 includes magnets 233 (or other elements) on the wheel 231 (or other rotatable member) and can be rotated in conjunction with the wheel 231. A magnetic sensor 234 (or other sensing means) can be disposed at or along a rotation trace (or movement path) of the magnet 233 to thus sense the presence of or changes in magnetic fields of the magnets 233. Accordingly, when the wheel 231 is rotated, the magnets 233 are also rotated, and the magnetic sensor 234 senses whether the magnetic field of the magnets 233 becomes stronger or weaker, and transmits a corresponding signal according to such sensing. The mobile terminal 200 determines a rotation direction according to the signal from the magnetic sensor 234 and determines the amount of movement of the cursor or the pointer by adding the number of times that the magnets 233 pass the magnetic sensor 234.

Of course, various other types of movement detection schemes can be implemented, and the above-described use of magnetic field detection is merely exemplary. For example, the rotation detecting unit that detects the rotation of the wheel 231 may be implemented by using a light emitting unit and an optical sensor that detects the presence of and any changes in light from the light emitting unit.

The push switch unit 235 may include a metallic dome 236 (or other type of activation member) and a contact 237 (or other electrical terminal element). A plurality of contacts 237 may be disposed around (or near) the through hole (or other opening or gap) of the circuit board 205, and the metallic domes 236 are formed to be attached on a plastic sheet 238 (or other type of substrate material). Accordingly, when the wheel 231 is pressed (or otherwise activated by the user), one or more metallic domes 236 at the user pressed location is/are pressed to come into contact with the contacts 237 thereunder, to conduct (or create an electrical connection) and accordingly, an input signal is generated.

Second manipulating units 240 that detect and receive user inputs in a touch (tactile) manner are installed around (or near) the wheel 231.

The second manipulating units 240 includes a first touch sensing unit 242 (or other sensing means) that senses a user touch or contact at a key mark 241 (or other visual indicator), respectively. A light emitting unit 243 (or other illumination means) that illuminates the key mark 241 may be provided at one side of (or near) the first touch sensing unit 242.

A second touch sensing unit 260 (or other touch sensitive member) may be provided between (or near) the first and second manipulating units 230 and 240 in order to detect any erroneous touches (or contacts) applied on the second manipulating unit 240 while the first manipulating unit 230 is being manipulated. The controller 161 recognizes the signals detected by the first and second touch sensing units (242, 260) and compares them. Upon such comparison, if the controller 161 determines that the second manipulating unit 240 has been manipulated, it may output a corresponding signal to the screen or may execute a corresponding function in an appropriate manner. A procedure for checking whether or not the second manipulating unit 240 has been manipulated is similar to that of the first exemplary embodiment of the present invention, so its detailed description will be omitted merely for the sake of brevity.

A third manipulating unit 250 (or other user input means) that allows detection of touch-sensitive inputs from the user may be installed at a central portion of the wheel 231. The third manipulating unit 250 may include a transmissive window 251 (or other transparent element), a transmissive conductive sheet 252 (or other light transmissive member), and a third touch sensing unit 253 (or other sensing means).

The third manipulating unit 250 will be described in more detail. The transmissive window 251 is disposed at the central portion of the wheel 231. The window 251 may be made of a transmissive or translucent material allowing viewing of information shown on a display unit 280 that may be installed thereunder.

The transmissive conductive sheet 252 underneath the window 251 serves to transfer any changes in capacitance or pressure in order to detect a user touch being applied on the window 251. The transmissive conductive sheet 252 may be formed as a transmissive conductive film, e.g., a thin film made of indium tin oxide (ITO) or made of carbon nano-tubes (CNT), etc.

The third touch sensing unit 253 is provided around (or near) the through hole (or opening) of the circuit board 205 to sense any user applied pressure or capacitance transferred by the conductive sheet 252 and recognize the same as an input signal. A plurality of third touch sensing units 253 are formed to sense a touch applied on the window 251 according to different areas or regions thereof. Accordingly, a touch applied to a particular area of the window 251 may be sensed by a touch sensing unit 253 corresponding to the particular area among the touch sensing units 253.

Accordingly, the touch applied to the window 251 is sensed by the third touch sensing unit 253 disposed at an internal surface of the window 251 to perform an input operation. In this case, however, there is a possibility that the window 251 may be touched while the wheel 231 is being manipulated. Such unintentional (or undesirable) touching may be detected by the erroneous input detecting unit and execution of an input of the third manipulating unit 250 may be blocked (or suppressed).

The display unit 280 is provided at an inner surface of the third manipulating unit 250. The display unit 280 may be formed as a liquid crystal display (LCD), an organic light emitting diode (OLED) display, a group of LEDs, and the like. The visual information outputted from the display unit 280 can be seen the user via the through hole 231 a of the wheel 231.

Accordingly, a control command recognized by the third touch sensing unit 253 may vary according to the content indicated by the visual information. For example, if an amount controlled by the mobile terminal 200 relates to audio or video data, a touch signal may indicate an acknowledgement (OK) with respect to the amount.

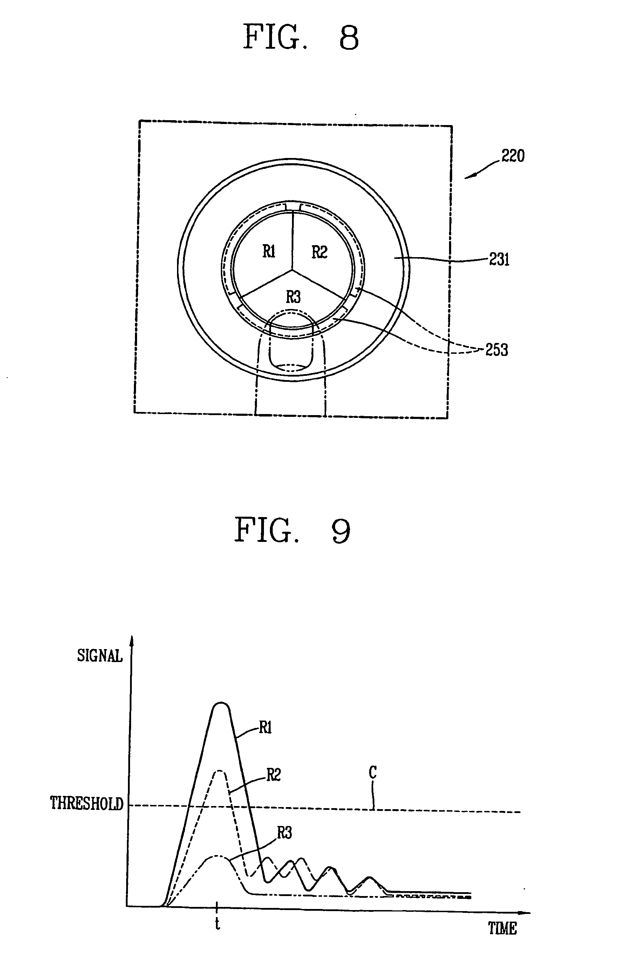

FIG. 8 shows an operational state of an input device in FIG. 7. The erroneous input detecting unit may have a plurality of touch areas (or regions) R1 to R3 formed in a divided manner at a central portion of the wheel 231. For example, a central circle region of the wheel 231 is divided into fan-shaped sections to form the touch areas R1 to R3. Of course, the touch areas R1 to R3 may be formed to have any geometrical shape, such as polygonal sections, rings, etc. or any combination thereof.

The erroneous input detecting unit may use controller 161 in order to block (or suppress) undesired or erroneous inputs from the third manipulating unit 250 when only some of the third touch sensing units 253 sense a user touch input. The controller 161 is used to control the inputting operation of the third manipulating unit 250.

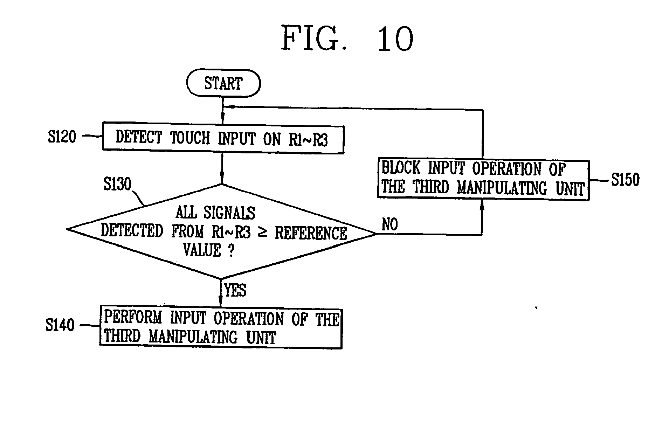

As shown in FIG. 8, even if the touch area R2 is partially touched while the user rotates the wheel 231, an input operation of the third manipulating unit 250 is not executed. This will be described with reference to FIGs. 9 and 10 as follows.

FIG. 9 is a graph showing the strength of signals sensed by third touch sensing units corresponding to each touched portion of the input device in FIG 7, and FIG 10 is a flow chart illustrating the process of controlling by the input device in FIG 7.

As shown in FIG 9, if the waveforms of the signals sensed by the touch areas (R1, R2) are higher than a reference value (threshold value) (C) at a moment (t) and the waveform of the signal sensed by the touch area R3 is lower than the reference value, it may be inferred that the user has touched a portion near a boundary between the touch areas R1 and R2 while rotating the wheel 231, and in this case, because there has been no detected contact at the touch area R3, an input of the third manipulating unit 250 is not executed.

Namely, as shown in FIG 10, the third manipulating unit 250 determines that only when all the signals with respect to the touch areas R1 to R3 are higher than the reference value, a corresponding touch input is deemed to be intentional and executes the touch input (S 130). Thus, an input caused by an erroneous touch with respect to the third manipulating unit 250 may be minimized while manipulating the first manipulating unit 230.

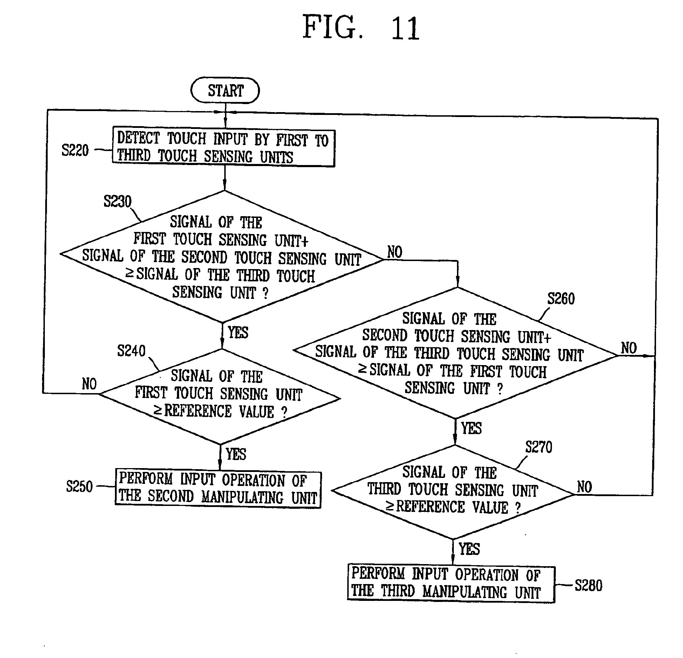

FIG. 11 is a flow chart illustrating the process of controlling by a different input device according to an exemplary embodiment of the present invention.

The present exemplary embodiment provides a procedure for determining whether to execute a function corresponding to an input of the second manipulating unit 240 or whether to execute a function corresponding to an input of the third manipulating unit 250 by using the second touch sensing unit 260 of an input device 220. In this case, the controller 161 operates according to the following procedure.

Namely, the controller 161 detects signals of the first to third touch sensing units 242, 260 and 253 at a particular point in time (S220).

The second touch sensing unit 260 is additionally used to minimize erroneous operations by discriminating whether a signal has been received from the first or the third touch sensing unit 242 or 253. The controller 161 checks whether the sum of the signal of the first touch sensing unit 242 and the signal of the second touch sensing unit 260 is greater than the signal of the third touch sensing unit 253 (S230). If the summed value is greater than the signal of the third touch sensing unit 253, the controller 161 determines that the input with respect to the third manipulating unit 250 is not proper.

Next, the third controller determines whether there is an input of the second manipulating unit 240 depending on whether a signal of the first touch sensing unit 242 is greater than the reference value (C) (S240). Only if such condition is satisfied, then the third controller executes the input of the second manipulating unit (S250).

If the sum of the signal of the first touch sensing unit 242 and the signal of the second touch sensing unit 260 is smaller than the signal of the third touch sensing unit 253 (S230), and if the sum of the signal of the second touch sensing unit 242 and the signal of the third touch sensing unit 260 is greater than the signal of the first touch sensing unit 253, the controller 161 blocks (i.e., suppresses, disregards, ignores, etc.) the input with respect to the second manipulating unit 240 (S260).

If the sum of the signal of the second touch sensing unit 260 and the signal of the third touch sensing unit 253 is greater than the signal of the first touch sensing unit 241 (S260), the controller 161 checks whether the signal of the third manipulating unit 250 is greater than the reference value (C) (S270). Only if this condition is met, then the controller 161 executes the input of the third manipulating unit 250.

When there are inputs via the second manipulating unit 240 and the third manipulating unit 250, because the inputs would affect each other, the method checks which one of the signals of the manipulating units is stronger (i.e., at a higher level) by using the signal of the second touch sensing unit 260 to thus minimize any undesired or erroneous touch operations.

Here, it should be noted that the device and corresponding method assumes user touch inputs are intended (i.e., desired, purposeful, etc.) or unintended (i.e., undesired, accidental, etc.) based upon certain characteristics of the particular touch operation. For example, the method assumes that the surface area being touched (or contacted) would be relatively great if the user intended to touch and activate such region, while an unintended touch is assumed to cover only a relatively small portion of the touch region. Alternatively, the method considers a duration of a touch on a particular region to discriminate whether the user intended such touch activation. That is, a relatively long touch or contact duration may be considered to be intentional while a short duration touch may be considered to be accidental. Alternatively, the method considers the order of multiple touches, where a first touched region among multiple touched regions may considered to be the intended touch input. Other characteristics, such a touch pressure or the like may be employed. Such touch characteristics (e.g., contact surface area, contact duration, touch time sequence, contact pressure, etc.), alone or in any combination, may be used to determine whether the user really intended to activate the touched region.

As so far described, the input device and the mobile terminal implementing the same according to the exemplary embodiments of the present invention have the following effects.

That is, if an adjacent region is erroneously (or undesirably) touched when a particular manipulating unit is operated (or activated), the erroneous touch can be cut off (i.e., blocked, suppressed, disregarded, ignored, etc.), so the accuracy of user input operations can be improved.

The teachings of the present invention can be implemented and utilized in a beneficial manner for a user input element (e.g., a scroll key, a dial, a joystick, or the like) that allows multiple movement directions, which would thus require better distinguishing among different input activation and operations.

In addition, because touch sensing unit(s) are provided to detect an erroneous or undesired touch contact or activation, the features of the present invention can be easily applied without burdensome implementations in hardware and/or software, while the external appearance of the mobile terminal need not be drastically changed.

In the preceding passages, reference is made to "user touches." One skilled in the art will recognize that these touches may include touches with a finger, a stylus or other device. Unintentional user touches may include touches with a finger, a stylus or other device, as well as touches to a device when placed in a pocket, a purse, a briefcase or other location where movement of the device or items may cause a touch signal to be generated.

The mobile devices described above may be equipped for wireless or satellite communications. These devices may also include a Global Positioning System or related navigation function. These devices may also be personal digital assistants (PDAs) that equipped with word processing, spreadsheet, drawing, calendar and other software functions. These devices may include a still and/or video camera, image/video annotation/manipulation software and an image/video storage capability. These devices may be equipped with web browsing features and may be equipped to receive and display television and radio programming.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments are implemented by controller.

For a software implementation, the embodiments described herein may be implemented with separate software modules, such as procedures and functions, each of which perform one or more of the functions and operations described herein. The software codes can be implemented with a software application written in any suitable programming language and may be stored in memory and executed by a controller or processor.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A mobile terminal (100, 200), comprising:
a first manipulating unit (130,230) adapted to receive first inputs comprising one of a plurality of movement directions with respect to a reference position, and adapted to activate one or more functions corresponding to each of the plurality of movement directions;
a second manipulating unit (140,240) located near the first manipulating unit (130, 230) and including a first touch sensing unit (142,242); and
an erroneous input detecting unit comprising a second touch sensing unit (160, 260) disposed between the first and second manipulating units (130,230; 140,240);
wherein the erroneous input detecting unit further comprises a controller (161) adapted to identify a touch input
as an unintended input,
**characterized in that** the controller (161) is further:
adapted to determine whether a first signal (A) generated by the first touch sensing unit (142, 242) is greater than a reference value (C);
adapted to determine whether the first signal (A) is greater than a second signal (B) generated by the second touch sensing unit (160, 260) that is generated simultaneously with the first signal (A); and
adapted to identify a touch input made on the second manipulating unit (140,240) as an unintended input that has been made while the first manipulating unit (130, 230) was manipulated when the first signal (A) is greater than the reference value (C) and not greater than the second signal (B).

2. The mobile terminal of claim 1, wherein the second manipulating unit (140,240) comprises a plurality of second manipulating units (140, 240) spaced apart from each other around the first manipulating unit (130, 230), each including a corresponding first touch sensing unit (142, 242), the mobile terminal further comprising:
a plurality of second touch sensing units (160,260), each second touch sensing unit (160, 260)disposed between the first manipulating unit (130,230) and a corresponding one of the plurality of second manipulating units (140,240).

3. The mobile terminal of any one of claims 1 to 2,
wherein the first manipulating unit (230) comprises a wheel (231), the mobile terminal further comprising a third manipulating unit (250) adapted to receive a touch input and disposed in an opening (231a) formed in a central portion of the wheel (231) of the first manipulating unit (230).

4. The mobile terminal of claim 3, wherein the third manipulating unit (250) comprises multiple touch areas (R1,R2,R3) and multiple third touch sensing units (253), with one or more of the multiple third touch sensing units (253) disposed in each touch area (R1, R2, R3).

5. The mobile terminal of claim 4, wherein the controller (161) is adapted to block an input of the third manipulating unit (250) when only some of the multiple third touch sensing units (253) detect touches exceeding the reference value (C) when the first manipulating unit (230) is manipulated.

6. The mobile terminal of claims 4 or 5, wherein the multiple third touch sensing units (253) are adapted to sense a change in a user-applied pressure.

7. The mobile terminal of any one of claims 3 to 6, further comprising a display unit (280) provided in the third manipulating unit (250).

## Patentansprüche

1. Mobiles Endgerät (100, 200), umfassend:
eine erste Manipulationseinheit (130, 230), welche dazu ausgelegt ist, erste Eingaben entgegenzunehmen, die eine aus einer Mehrzahl Bewegungsrichtungen mit Bezug auf eine Referenzposition beinhalten, und welche dazu ausgelegt ist, eine oder mehrere Funktionen in Entsprechung zu jeder der Mehrzahl Bewegungsrichtungen zu aktivieren,
eine zweite Manipulationseinheit (140, 240), welche nahe der ersten Manipulationseinheit (130, 230) gelegen ist und eine erste Berührungserfassungseinheit (142, 242) umfasst, und
eine Fehleingabeerkennungseinheit, welche eine zwischen der ersten und der zweiten Manipulationseinheit (130, 230; 140, 240) angeordnete zweite Berührungserfassungseinheit (160, 260) umfasst,
wobei die Fehleingabeerkennungseinheit ferner eine Steuereinrichtung (161) umfasst, welche dazu ausgelegt ist, eine Berührungseingabe als unbeabsichtigte Eingabe zu identifizieren,
**dadurch gekennzeichnet, dass** die Steuereinrichtung (161) ferner:
zur Feststellung ausgelegt ist, ob ein von der ersten Berührungserfassungseinheit (142, 242) erzeugtes erstes Signal (A) größer als ein Referenzwert (C) ist,
zur Feststellung ausgelegt ist, ob das erste Signal (A) größer als ein von der zweiten Berührungserfassungseinheit (160, 260) erzeugtes zweites Signal (B) ist, welches gleichzeitig mit dem ersten Signal (A) erzeugt wird, und
dazu ausgelegt ist, eine an der zweiten Manipulationseinheit (140, 240) gemachte Berührungseingabe als unbeabsichtigte Eingabe zu identifizieren, die gemacht worden ist, während die erste Manipulationseinheit (130, 230) manipuliert wurde, wenn das erste Signal (A) größer als der Referenzwert (C) und nicht größer als das zweite Signal (B) ist.

2. Mobiles Endgerät nach Anspruch 1, wobei die zweite Manipulationseinheit (140, 240) eine Mehrzahl zweiter Manipulationseinheiten (140, 240) umfasst, welche in gegenseitigem Abstand um die erste Manipulationseinheit (130, 230) herum angeordnet sind und jeweils eine entsprechende erste Berührungserfassungseinheit (142, 242) umfassen, wobei das mobile Endgerät ferner eine Mehrzahl zweiter Berührungserfassungseinheiten (160, 260) umfasst, wobei jede zweite Berührungserfassungseinheit (160, 260) zwischen der ersten Manipulationseinheit (130, 230) und einer entsprechenden der Mehrzahl zweiter Manipulationseinheiten (140, 240) angeordnet ist.

3. Mobiles Endgerät nach einem der Ansprüche 1 bis 2,
wobei die erste Manipulationseinheit (230) ein Rad (231) umfasst, wobei das mobile Endgerät ferner eine dritte Manipulationseinheit (250) umfasst, welche zur Entgegennahme einer Berührungseingabe ausgebildet ist und in einer Öffnung (231a) angeordnet ist, die in einem Zentralabschnitt des Rads (231) der ersten Manipulationseinheit (230) gebildet ist.

4. Mobiles Endgerät nach Anspruch 3, wobei die dritte Manipulationseinheit (250) mehrere Berührbereiche (R1, R2, R3) sowie mehrere dritte Berührungserfassungseinheiten (253) umfasst, wobei in jedem Berührbereich (R1, R2, R3) ein oder mehr der mehreren dritten Berührungserfassungseinheiten (253) angeordnet sind.

5. Mobiles Endgerät nach Anspruch 4, wobei die Steuereinrichtung (161) dazu ausgelegt ist, eine Eingabe der dritten Manipulationseinheit (250) zu blockieren, wenn nur einige der mehreren dritten Berührungserfassungseinheiten (253) Berührungen erkennen, die den Referenzwert (C) übersteigen, wenn die erste Manipulationseinheit (230) manipuliert wird.

6. Mobiles Endgerät nach Anspruch 4 oder 5, wobei die mehreren dritten Berührungserfassungseinheiten (253) dazu ausgelegt sind, eine Änderung eines nutzerseitig aufgebrachten Drucks zu erfassen.

7. Mobiles Endgerät nach einem der Ansprüche 3 bis 6, ferner umfassend eine Anzeigeeinheit (280), welche in der dritten Manipulationseinheit (250) vorgesehen ist.

## Revendications

1. Terminal mobile (100, 200), comprenant :
une première unité de manipulation (130, 230) adaptée pour recevoir des premières entrées comprenant l'une parmi une pluralité de directions de mouvement par rapport à une position de référence, et adaptée pour activer une ou plusieurs fonctions correspondant à chacune parmi la pluralité de directions de mouvement ;
une deuxième unité de manipulation (140, 240) placée près de la première unité de manipulation (130, 230) et incluant une première unité de détection tactile (142, 242) ; et
une unité de détection d'entrée erronée comprenant une deuxième unité de détection tactile (160, 260) disposée entre les première et deuxième unités de manipulation (130, 230 ; 140, 240) ;
dans lequel l'unité de détection d'entrée erronée comprend en outre un contrôleur (161) adapté pour identifier une entrée tactile en tant qu'entrée non intentionnelle,
**caractérisé en ce que** le contrôleur (161) est en outre :
adapté pour déterminer si un premier signal (A) généré par la première unité de détection tactile (142, 242) est supérieur à une valeur de référence (C) ;
adapté pour déterminer si le premier signal (A) est supérieur à un deuxième signal (B) généré par la deuxième unité de détection tactile (160, 260) qui est généré simultanément avec le premier signal (A) ; et
adapté pour identifier une entrée tactile réalisée sur la deuxième unité de manipulation (140, 240) comme une entrée non intentionnelle qui a été réalisée alors que la première unité de manipulation (130, 230) était manipulée lorsque le premier signal (A) est supérieur à la valeur de référence (C) et n'est pas supérieur au deuxième signal (B).

2. Terminal mobile selon la revendication 1, dans lequel la deuxième unité de manipulation (140, 240) comprend une pluralité de deuxièmes unités de manipulation (140, 240) espacées les unes des autres autour de la première unité de manipulation (130, 230), chacune comprenant une première unité de détection tactile correspondante (142, 242), le terminal mobile comprenant en outre :
une pluralité de deuxièmes unités de détection tactile (160, 260), chaque deuxième unité de détection tactile (160, 260) étant disposée entre la première unité de manipulation (130, 230) et l'une correspondante parmi la pluralité de deuxièmes unités de manipulation (140, 240).

3. Terminal mobile selon l'une quelconque de revendications 1 à 2,
dans lequel la première unité de manipulation (230) comprend une roulette (231),
le terminal mobile comprenant en outre une troisième unité de manipulation (250) adaptée pour recevoir une entrée tactile et disposée dans une ouverture (231a) formée dans une partie centrale de la roulette (231) de la première unité de manipulation (230).

4. Terminal mobile selon la revendication 3, dans lequel la troisième unité de manipulation (250) comprend de multiples zones tactiles (R1, R2, R3) et de multiples troisièmes unités de détection tactile (253), avec une ou plusieurs des multiples troisièmes unités de détection tactile (253) disposées dans chaque zone tactile (R1, R2, R3).

5. Terminal mobile selon la revendication 4, dans lequel le contrôleur (161) est adapté pour bloquer une entrée de la troisième unité de manipulation (250) lorsque seulement certaines parmi les multiples troisièmes unités de détection tactile (253) détectent des touchés dépassant la valeur de référence (C) lorsque la première unité de manipulation (230) est manipulée.

6. Terminal mobile selon les revendications 4 ou 5, dans lequel les multiples troisièmes unités de détection tactile (253) sont adaptées pour détecter un changement dans une pression appliquée par un utilisateur.

7. Terminal mobile selon l'une quelconque des revendications 3 à 6, comprenant en outre une unité d'affichage (280) prévue dans la troisième unité de manipulation (250).
